Europäisches Patentamt

European Patent Office

Office européen des brevets

(19)

(11) Publication number: **0 054 235**
**B1**

# (12) EUROPEAN PATENT SPECIFICATION

(45) Date of publication of patent specification: **10.04.85**

(51) Int. Cl.⁴: **G 21 C 3/32, G 21 C 5/06**

(21) Application number: **81110141.9**

(22) Date of filing: **04.12.81**

(54) **Fuel assembly for a nuclear reactor.**

(30) Priority: **16.12.80 US 217059**

(43) Date of publication of application:
**23.06.82 Bulletin 82/25**

(45) Publication of the grant of the patent:
**10.04.85 Bulletin 85/15**

(84) Designated Contracting States:
**AT CH DE LI SE**

(56) References cited:
**GB-A-1 516 957**
**US-A-3 368 602**
**US-A-3 377 254**
**US-A-3 770 583**
**US-A-3 828 868**
**US-A-3 864 211**
**US-A-3 971 575**
**US-A-4 030 975**

(73) Proprietor: **WESTINGHOUSE ELECTRIC CORPORATION**
**Westinghouse Building Gateway Center**
**Pittsburgh Pennsylvania 15222 (US)**

(72) Inventor: **Gjertsen, Robert K.**
**126 Penn Lear Drive**
**Monroeville Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

The invention relates to fuel assemblies for nuclear reactors and more particularly to fuel assemblies having integral latching mechanisms.

In typical nuclear reactors, reactivity control is accomplished by varying the amount of neutron absorbing material (poisons) in the reactor core. Generally, neutron absorbing control rods are utilized to perform this function by varying the number and location of the control rods with respect to the reactor core. In addition to control rods, burnable poisons and poisons dissolved in the reactor coolant can be used to control reactivity.

In the conventional designs of pressurized water reactors, an excessive amount of reactivity is designed into the reactor core at start-up so that as the reactivity is depleted over the life of the core the excess reactivity may be employed to lengthen the core life. Since an excessive amount of reactivity is designed into the reactor core at the beginning of core life, neutron absorbing material such as soluble boron must be placed in the core at that time in order to properly control the excess reactivity. Over the core life, as reactivity is consumed, the neutron absorbing material is gradually removed from the reactor core so that the original excess reactivity may be used. While this arrangement provides one means of controlling a nuclear reactor over an extended core life, the neutron absorbing material used during core life absorbs neutrons and removes reactivity from the reactor core that could otherwise be used in a more productive manner such as in plutonium fuel production. The consumption of reactivity in this manner without producing a useful product results in a less efficient depletion of uranium and greater fuel costs than could otherwise be achieved. Therefore, it would be advantageous to be able to extend the life of the reactor core without suppressing excess reactivity with neutron absorbing material thereby providing an extended core life with a significantly lower fuel cost.

One such method of producing an extended core life while reducing the amount of neutron absorbing material in a heavy water reactor core is by the use of "Spectral Shift Control". In that case the reduction of excess reactivity (and thus neutron absorbing material) is achieved by replacing a large portion of the heavy water reactor coolant with ordinary water. This retards the chain reaction by shifting the neutron spectrum to higher energies and permits the reactor to operate at full power with reduced neutron absorbing material. This shift in the neutron spectrum to a "hardened" spectrum also causes more of the $U^{238}$ to be converted to plutonium that is eventually used to produce heat. Thus, the shift from a "soft" to a "hard" spectrum results in more neutrons being consumed by $U^{238}$ in a useful manner rather than by poisons. As reactivity is consumed, the ordinary water is gradually replaced with heavy water so that the reactor core reactivity is maintained at a proper level. By the end of core life, essentially all the ordinary water has been replaced by heavy water while the core reactivity has been maintained. Thus, the reactor can be controlled without the use of neutron absorbing material and without the use of excess reactivity at start-up which results in a significant uranium fuel cost savings. The additional plutonium production also reduces the $U^{235}$ enrichment requirements.

It is the principal object of the present invention to provide a locking mechanism for a fuel assembly for use in connection with spectral shift reactors which provide for reduced uranium fuel costs and for an extended reactor core life.

With this object in view, the present invention resides in a fuel assembly for a nuclear reactor having a core supported on a core plate comprising a top nozzle, a bottom nozzle, a plurality of fuel elements containing nuclear fuel disposed between said top nozzle and said bottom nozzle, a number of guide tubes extending between and being attached to said top nozzle and to said bottom nozzle, and a center tube also extending between said top and bottom nozzles, characterized in that said center tube is rotatably supported on said top and bottom nozzles and a locking mechanism is associated with said center tube which includes a lower member attached to the lower end of said center tube and having engagement means thereon for engaging the core plate of the nuclear reactor so as to attach said fuel assembly to said core plate and that locking means are attached to said top nozzle for preventing disengagement of said engagement means.

The invention will become more readily apparent from the following description of a preferred embodiment thereof shown, by way of example only, in the accompanying drawings, in which:

Figure 1 is a cross-sectional view in elevation of a reactor vessel;

Figure 2 is a cross-sectional view in elevation of the top portion of a fuel assembly;

Figure 3 is a cross-sectional view in elevation of the bottom portion of a fuel assembly;

Figure 4 is a top view of an adapter plate;

Figure 5 is a view in perspective of displacer rods and their respective fuel assembly;

Figure 6 is a partial cross-sectional view in elevation of a fuel assembly;

Figure 7 is a partial cross-sectional view in elevation of the lower portion of a fuel assembly;

Figures 8 and 9 are partial cross-sectional views in elevation of the top portion of a fuel assembly;

Figure 10 is a view along line X—X of Figure 8;

Figure 11 is a view along line XI—XI of Figure 8; and

Figure 12 is a view along line XII—XII of Figure 8.

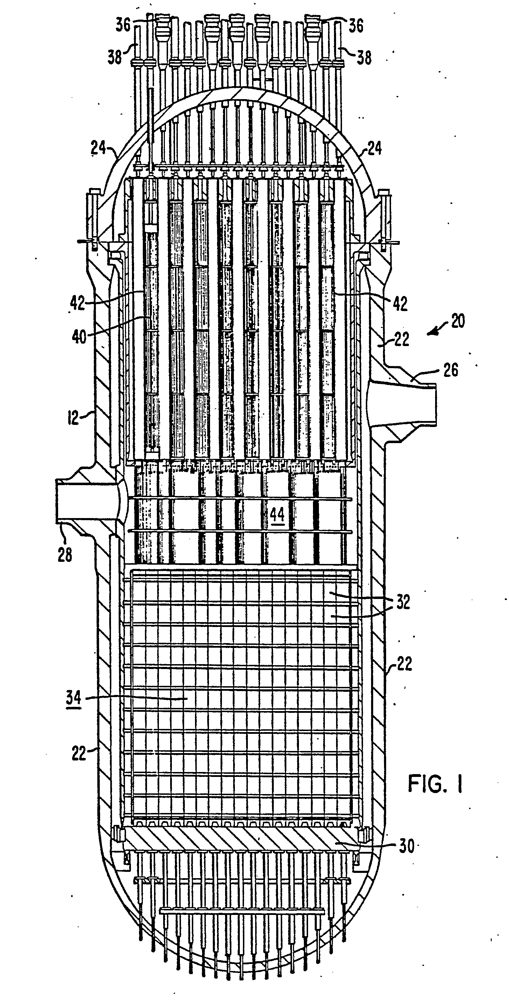

Referring to Figure 1, a nuclear reactor referred to generally as 20 comprises a reactor vessel 22 with a removable closure head 24 attached to the top end thereof. An inlet nozzle 26 and an outlet nozzle 28 are connected to reactor vessel 22 to allow a coolant such as water to circulate through the reactor vessel 22. A core plate 30 is disposed in the lower portion of the reactor vessel 22 and serves to support fuel assemblies 32. The fuel assemblies 32 are arranged in the reactor vessel 22 and form a reactor core 34. A plurality of control rod drive mechanisms 36 are disposed on closure head 24 for inserting them into, or withdrawing them from, the fuel assemblies 32. In addition, a plurality of displacer rod drive mechanisms 38 are also disposed on closure head 24 for inserting the displacer rods 40 into or withdrawing them from the fuel assemblies 32. For purpose of clarity, only some selected displacer rods 40 are shown in Figure 1. The displacer rods 40 are elongated cylindrical substantially hollow rods which may be of the type disclosed in EP—A1—0 054 237, entitled "Displacer Rod For Use In A Mechanical Spectral Shift Reactor". The displacer rods 40 are arranged so as to be in colinear alignment with the guide tubes in the fuel assemblies 32 so that the displacer rods 40 may be inserted therein when it is desired. The insertion of the displacer rods 40 into the fuel assemblies 32 displaces water-moderator from the core 34 which reduces core moderation.

A plurality of displacer rod guide structures 42 are located in the upper section of reactor vessel 22 with each being in alignment with a displacer rod drive mechanism 38 for guiding the movement of the displacer rods 40 through the upper section of the reactor vessel 22. A calandria 44 may be arranged between the fuel assemblies 32 and the displacer rod guide structures 42 and comprises a multiplicity of hollow stainless steel tubes arranged in colinear alignment with each displacer rod and control rods through the calandria area and for minimizing flow induced vibrations in the displacer rods and control rods.

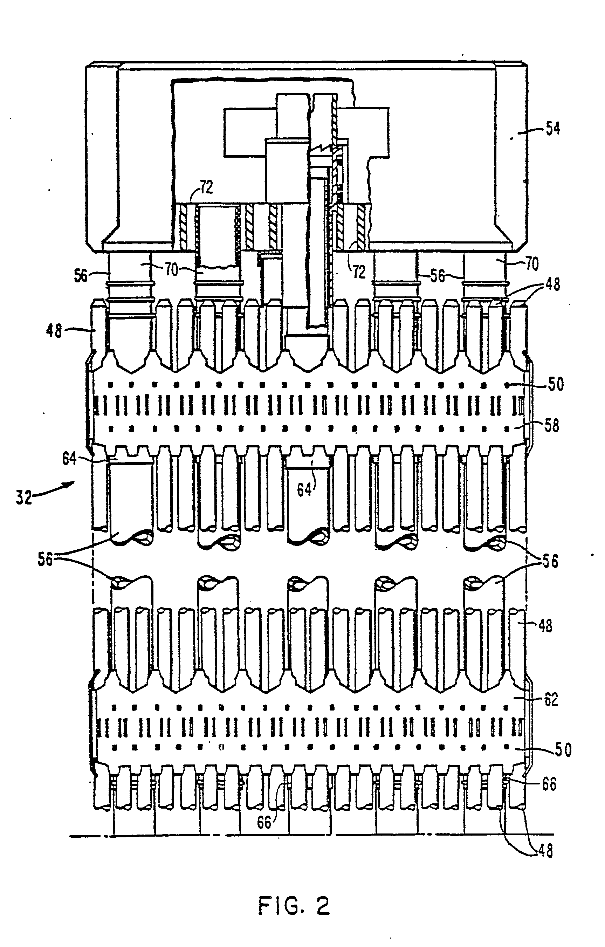

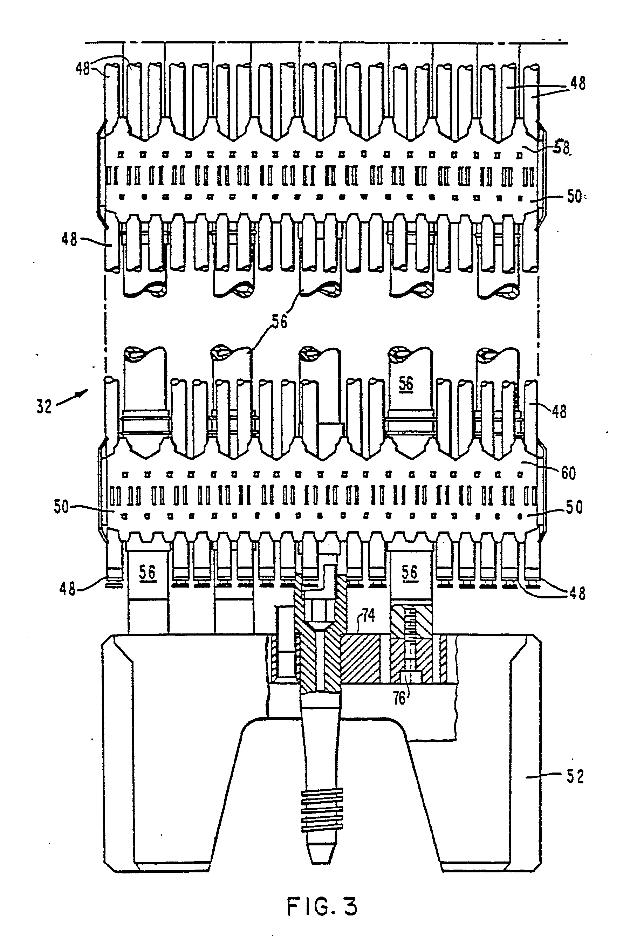

Referring now to Figures 2—5, fuel assemblies 32 comprise fuel elements 48, grids 50, bottom nozzle 52, top nozzle 54, and guide tubes 56. The fuel elements 48 may be elongated cylindrical metallic tubes containing nuclear fuel pellets and having both ends sealed by end plugs. Fuel elements 48 may be arranged in a substantially 20 × 20 rectangular array and are held in place by grids 50. Guide tubes 56 which may number 25 are arranged within each fuel assembly 32, each guide tube 56 occupying the space of about four fuel elements 48. The guide tubes 56 extend from bottom nozzle 52 to top nozzle 54 and provide a means to interconnect the grids 50, top nozzle 54 and bottom nozzle 52. The guide tubes 56 may be hollow cylindrical metallic tubes manufactured from a metal such as Zircaloy tubing and capable of accommodating rods such as displacer rods 40 or control rods. The guide tubes 56 may have openings in the sides or in the bottom ends thereof for allowing reactor coolant to pass therethrough for cooling purposes. The displacer rods 40 and control rods are manufactured to be approximately the same size so that each guide tube 56 can accommodate either a displacer rod or a control rod. When not occupied by a rod, the guide tubes 56 are filled with reactor coolant; however, when inserted into the guide tubes 56, the displacer rods 40 displace the coolant therein.

The grids 50, of which there are for example twelve per fuel assembly, are positioned at various locations along the length of fuel assembly 32 and serve to space fuel elements 48 and guide tubes 56 at appropriate distances from each other and to allow the reactor coolant to circulate in heat transfer relationship with fuel elements 48. The grid 50 located closest to top nozzle 54 is referred to as top grid 58 and the grid 50 located closest to bottom nozzle 52 is referred to as bottom grid 60 with the ten grids 50 located therebetween being referred to as intermediate grids 62.

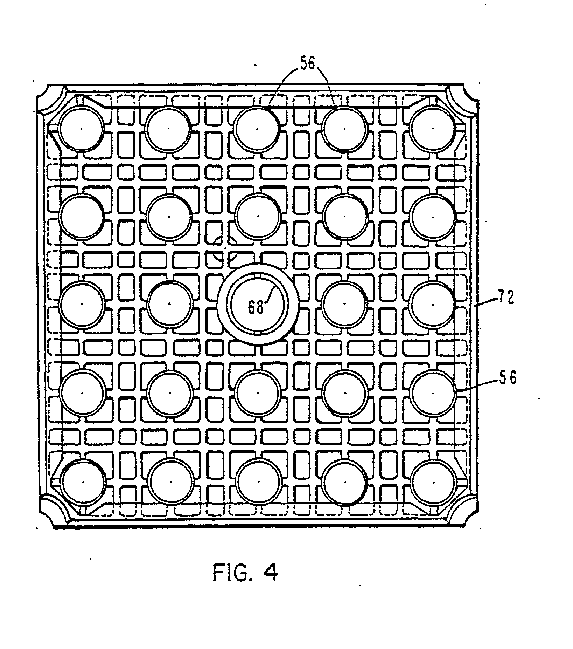

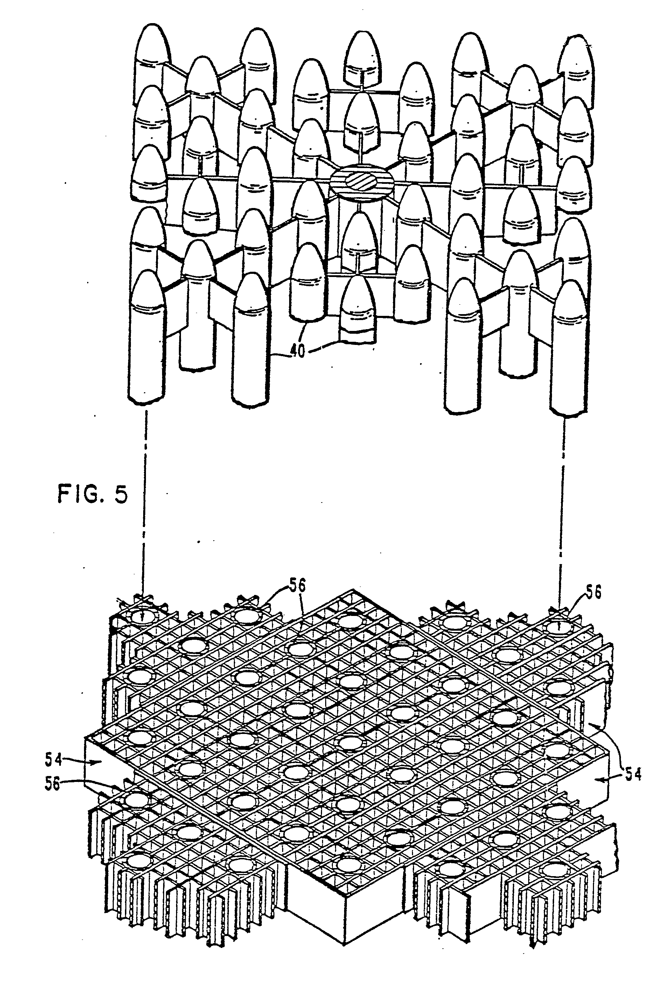

Twenty-four stainless steel sleeves 64 are brazed to each top grid 58 and each bottom grid 60 and twenty-four Zircaloy sleeves 66 are welded to each intermediate grid 62. All guide tubes 56 except center guide tube 68 are mechanically attached by internal bulging to each grid 50. Having twenty-four guide tubes 56 attached to all twelve grids 50 produces a fuel assembly with significantly greater lateral stiffness than most existing fuel assemblies. Additionally, twenty-four stainless steel sleeves 70 are welded to each top adapter plate 72 which forms part of top nozzle 54. Each top adapter plate 72 may be constructed as shown in Figure 5 but is preferably formed as shown in Figure 4. The stainless steel sleeves 70 are welded to each adapter plate 72 by four axial welds. A bottom adapter plate 74 which may be similar to the top adapter plate 72 forms part of the bottom nozzle 52. A plurality of stainless steel screws 76 penetrate through bottom adapter plate 74 and are used to attach the guide tubes 56 to the bottom nozzle 52. The screws 76 may also have a channel therethrough for allowing the reactor coolant to enter the guide tubes for cooling purposes.

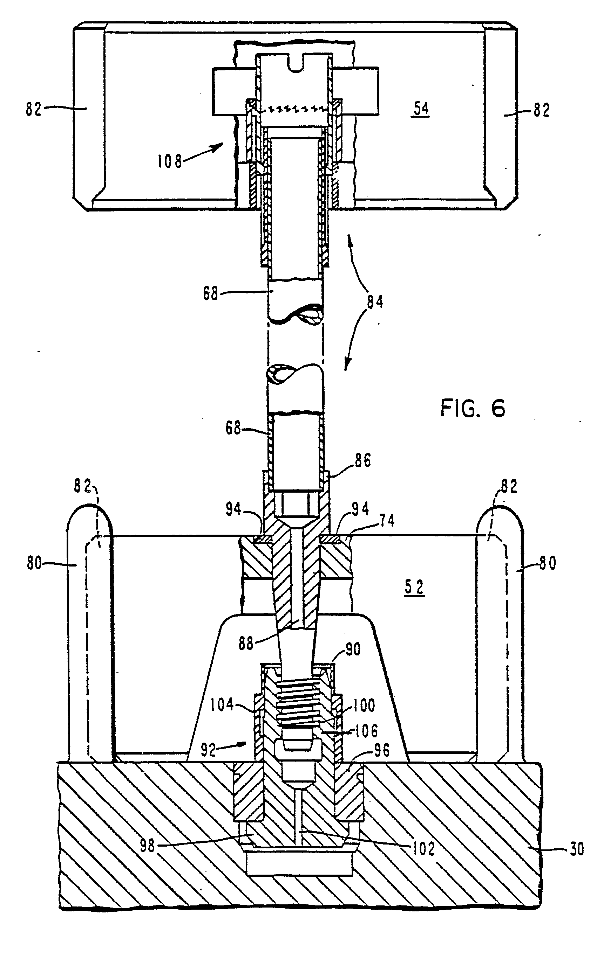

Referring now to Figure 6, the core plate 30 has a plurality of guide pins 80 mounted thereon so as to fit into semi-circular notches 82 of bottom nozzle 52. The guide pins 80 are arranged to fit into four adjacent fuel assembly notches 82 in order to provide alignment of the fuel assemblies 32 on the core plate 30. Similarly, the top nozzle 54 may also have semi-circular notches 82 for accommodating such guide pins from a top core plate (not shown) if so desired.

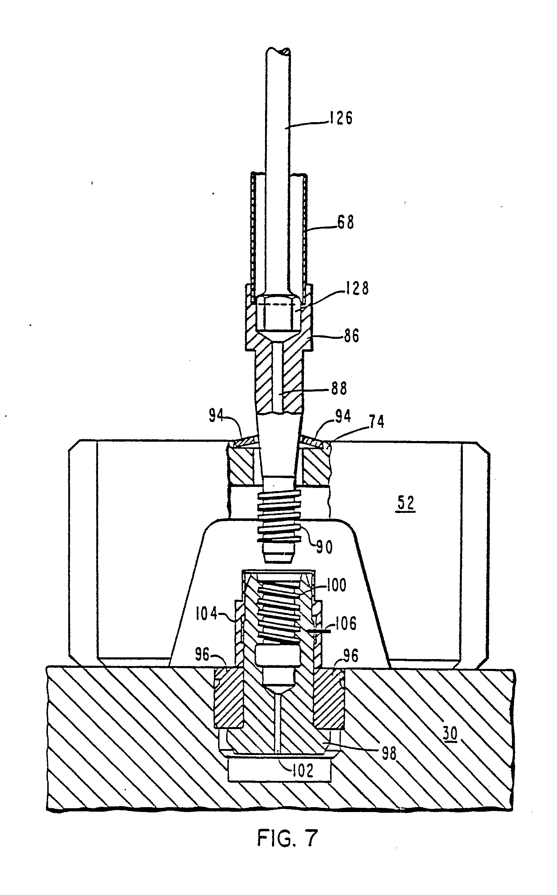

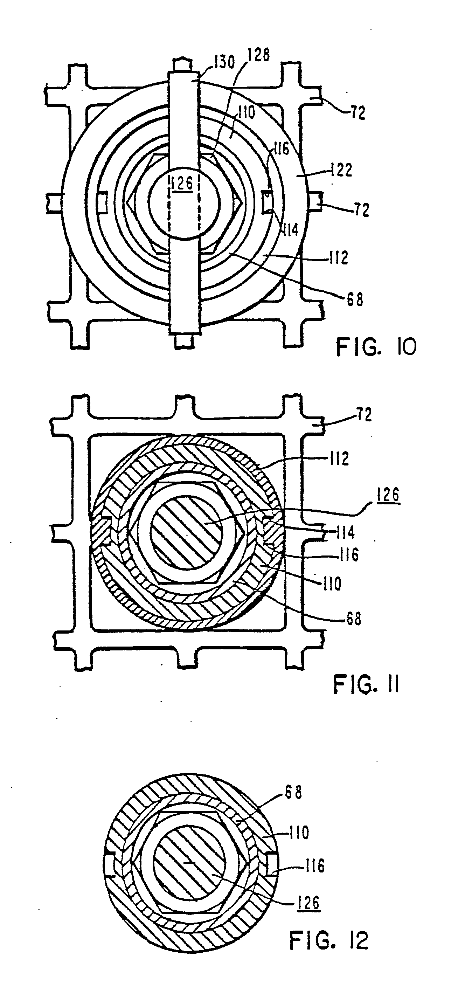

Referring now to Figures 6—12, a fuel assembly locking mechanism 84 is provided in each fuel assembly 32 for removably attaching each fuel assembly to the core plate 30 thereby eliminating the need for holddown springs.

For clarity the fuel assemblies shown in Figures 6—12 have been simplified; however, it should be understood that these fuel assemblies are identical to those shown in Figures 2—4. Thus, all fuel assemblies 32 may be provided with a locking mechanism 84. The locking mechanism 84 comprises a stainless steel lower member 86 which is slidably disposed in the center of the bottom adapter plate 74. A lower member 86 has a first bore 88 therein for allowing reactor coolant to pass therethrough and has external threads 90 around the outside of its lower portion for engaging anchor mechanism 92. A Belleville spring washer 94 is disposed in a notch in the bottom adapter plate 74 and is compressed when lower member 86 is forced downwardly relative to bottom adapter plate 74 as shown in Figure 6. Spring washer 94 prevents loss of axial preload due to small unlocking rotation of external threads 90.

Anchor mechanism 92 comprises a stainless steel lower anchor 96 which may be screw attached or welded to core plate 30. A removable insert 98 is captured and held by the lower anchor 96. The insert 98 may be made of an anti-galling and wear-resistant, austenitic, stainless steel and is provided with internal threads 100 for engaging external the threads 90 thereby locking the lower member 86 to the core plate 30. The insert 98 may also have a second bore 102 therein for allowing reactor coolant to pass therethrough and into the first bore 88 of the lower member 86. A locking collar 104 may be provided with internal threads (not shown) that mate with external threads (not shown) on insert 98 so that locking collar 104 may be screwed onto the insert 98 thereby pulling both insert 98 and the locking collar 104 into tight contact with the lower anchor 96. In addition, a locking pin 106 may be provided for locking the insert 98 to the locking collar 104 thereby preventing inadvertent unlocking of the two members.

The center guide tube 68 which may be made of Zircaloy is bulged attached to the lower member 86 and extends into the top nozzle 54. A ratchet mechanism 108 is attached to the top center guide tube 68 for locking the center guide tube 68 to the top nozzle 54. The ratchet mechanism 108 comprises a slotted member 110 which is welded to the upper end of the center guide tube 68. A slider member 112 having lugs 114 on its inner surface is slidably disposed over the slotted member 110 such that the lugs 114 are slidably disposed in slots 116 of the slotted member 110. This arrangement allows axial movement but not rotation of the slider member 112 relative to the slotted member 110. The slider member 112 also has a first set of ratchet teeth 118 mounted around the outside thereof. A second set of ratchet teeth 120 is mounted on a retainer housing 122 in a manner so as to mate with the first set of ratchet teeth 118. The retainer housing 122 is disposed around the slider member 112 and is attached to the top adapter plate 72 so that slider member 112 may slide relative to the retainer housing 122. A biasing mechanism 124 which may be a coil spring, is disposed between the top adapter plate 72 and the first set of ratchet teeth 118 and around the slider member 112 for urging the slider member 112 upwardly thus moving the first set of ratchet teeth 118 into contact with the second set of ratchet teeth 120. A turning key 126 which may be a long metal member having hexagonal head 128 on the lower end thereof may be inserted through the center guide tube 68 for screwing the external threads 90 into the internal threads 100. The turning key 126 may also have a crossbar 130 on the top end thereof that is capable of being disposed in a groove 132 of the slider member 112.

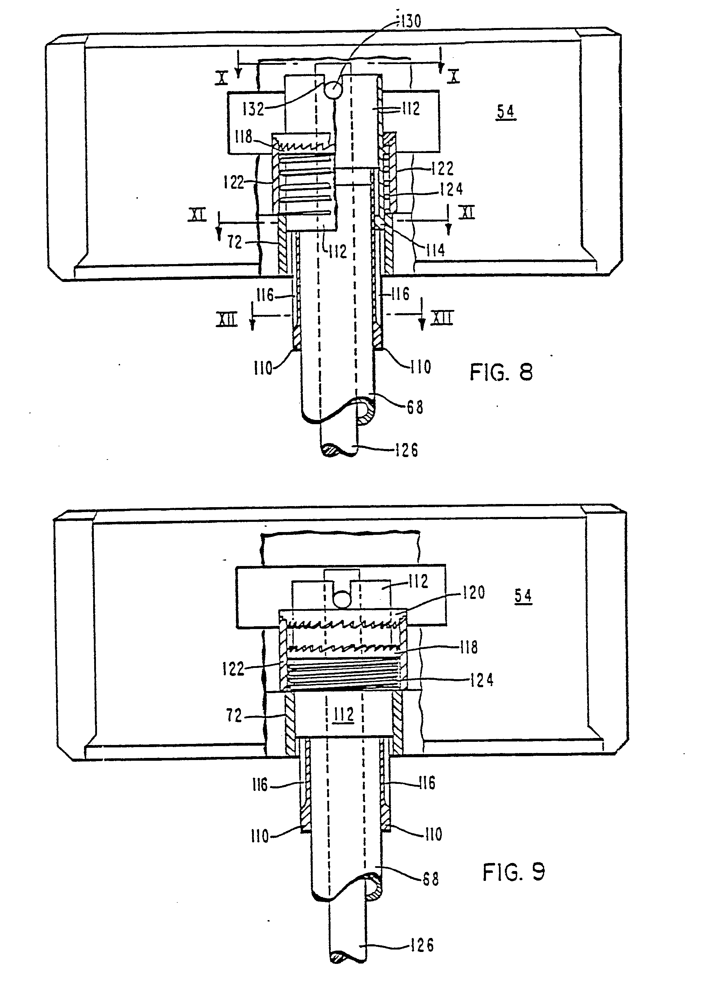

When it is desired to lock a fuel assembly 32 to the core plate 30, the turning key 126 inserted into center guide tube 68 to that its crossbar 130 is disposed in the groove 132 and the head 128 is disposed in the lower member 86. Since the center guide tube 68 is not firmly attached to the top adapter plate 72, the center guide tube 68 is free to rotate and slide relative to the top adapter plate 72 but may not be removed therefrom because of the interaction of the slotted member 110 and the slider member 112. So the turning key 126 is used to push the lower member 86 into contact with the lower adapter plate 74 and to turn the external threads 90 into the internal threads 100 thus locking fuel assembly 32 to core plate 30. Since the first set of ratchet teeth 118 is arranged to override the second set of ratchet teeth 120, it is not necessary to depress the slider member 112 in order to engage the external threads 90 and the internal threads 100. However, when it is necessary to unlock the lower member 86 from the anchor mechanism 92, it is necessary to depress the slider member 112 thereby compressing the biasing mechanism 124 and disengaging the first set of ratchet teeth 118 from the second set of ratchet teeth 120. When the slider member 112 has been thus depressed as shown in Figure 9, the slider member 112 can be held in this position and rotated so as to release the lower member 86 from the anchor mechanism 92 thereby unlocking the fuel assembly from the core plate 30. Since the top nozzle 54 is connected to the retainer housing 122 by means of the top adapter plate 72 and to the bottom adapter plate 74 by means of the guide tubes 56, when the first set of ratchet teeth 118 is engaged with the second set of ratchet teeth 120 the fuel assembly 32 is locked onto the core plate 30 and cannot be unlocked until the ratchet teeth are disengaged.

**Claims**

1. A fuel assembly (32) for a nuclear reactor having a core (34) supported on a core plate (30) comprising a top nozzle (54), a bottom nozzle (52), a plurality of fuel elements (48) containing nuclear fuel disposed between said top nozzle (54) and said bottom nozzle (52), a number of guide tubes (56) extending between and being attached to said top nozzle (54) and to said bottom nozzle (52), and a center tube (68) also extending between said top and bottom nozzles (54, 52) characterized in that said center tube (68) is rotatably supported on said top and bottom nozzles (54, 52) and a locking mechanism (84) is associated with said center tube (68) which includes a lower member (86) attached to the lower end of said center tube (68) and having engagement means (90) thereon for engaging the core plate (30) of the nuclear reactor so as to attach said fuel assembly (32) to said core plate (30) and that locking means (118, 120) are attached to said top nozzle (54) for preventing disengagement of said engagement means (90).

2. A fuel assembly according to claim 1, characterized in that said locking means comprises a slider member (112) having first teeth (118) thereon and slidably disposed on said center tube (68); and a retainer housing (122) having second teeth (120) thereon and attached to said top nozzle (54), said first teeth (118) and said second teeth (120) being arranged to prevent rotation of said center tube (68) when engaged.

3. A fuel assembly according to claim 2, characterized in that said locking means further comprises biasing means (124) for urging said first teeth (118) into engagement with said second teeth (120).

4. A fuel assembly according to claim 3, characterized in that said locking means further comprises a slotted member (110) attached to said center tube (68) and in contact with said slider member (112) for preventing rotation of said slider member (112) with respect to said center tube (68) but allowing said slider member (112) to slide relative to said slotted member.

5. A fuel assembly according to claim 4, characterized in that said second teeth (120) are arranged to override said first teeth (118) when it is desired to engage said fuel assembly (32) with said core plate (30).

6. A fuel assembly according to claim 5, characterized in that said fuel assembly further comprises a spring washer (94) disposed on said bottom nozzle (52) near said core plate (30) for preventing loss of axial preload on said center tube (68) when said spring washer (94) is compressed.

7. A fuel assembly according to claim 6, characterized in that said center tube (68) is also slidably disposed in said top nozzle (54).

**Revendications**

1. Assemblage combustible (32) pour réacteur nucléaire comportant un coeur (34) supporté par une plaque inférieure (30) et comprenant une tubulure supérieure (54), une tubulure inférieure (52), plusieurs éléments combustibles (48) contenant le combustible nucléaire et disposés entre la tubulure supérieure (54) et la tubulure inférieure (52), plusieurs tubes (56) de guidage disposés entre et fixés à la tubulure supérieure (54) et a la tubulure inférieure (52), et un tube central (68) aussi disposé entre les tubulures (54, 52) supérieure et inférieure, cet assemblage combustible étant caractérisé en ce que ledit tube central (68) est monté aux tubulures (54, 52) supérieure et inférieure de manière à pouvoir tourner; et en ce qu'un mécanisme (84) de verrouillage est associé audit tube central (68) et comprend un élément inférieur (86) fixé à l'extrémité inférieure de ce tube central (68) et un moyen (90) d'engagement dans la plaque inférieure (30) du coeur du réacteur nucléaire pour fixer l'assemblage combustible (32) à cette plaque inférieure (30); et en ce que des moyens (118,.120) de verrouillage sont fixés à la tubulure supérieure (54) pour empêcher le dégagement du moyen (90) d'engagement.

2. Assemblage combustible suivant la revendication 1, caractérisé en ce que ces moyens de verrouillage comprennent un élément coulissant (112) comportant un premier ensemble de dents (118) et disposé de manière à pouvoir coulisser sur le tube (68) central; et un manchon (122) de maintien comportant un deuxième ensemble de dents (120) et fixé à la tubulure supérieure (54), le premier ensemble de dents (118) et le deuxième de dents (120) étant disposés de manière à empêcher la rotation du tube (68) central lorsqu'ils sont en prise.

3. Assemblage combustible suivant la revendication 2, caractérisé en ce que les moyens de verrouillage comprennent en outre un moyen (124) de poussée pour amener le premier ensemble de dents (118) en prise avec le deuxième ensemble de dents (120).

4. Assemblage combustible suivant la revendication 3, caractérisé en ce que les moyens de verrouillage comprennent en outre un élément rainuré (110) fixé au tube (68) central et en contact avec l'élément coulissant (112) afin d'empêcher la rotation de cet élément coulissant (112) par rapport au tube (68) central mais tout en permettant à l'élément coulissant (112) de coulisser par rapport à l'élément rainuré.

5. Assemblage combustible suivant la revendication 4, caractérisé en ce que le deuxième ensemble de dents (120) est monté de manière à glisser sur le premier ensemble de dents (118) lorsqu'on désire fixer l'assemblage combustible (32) à la plaque inférieure (30).

6. Assemblage combustible suivant la revendication 5, caractérisé en ce qu'il comprend en outre une rondelle élastique (94) placée sur la tubulure inférieure (52) au voisinage de la plaque inférieure (30) du coeur afin d'empêcher une perte de poussée axiale préalable sur ledit tube central (68) lorsque la rondelle élastique (94) est comprimée.

7. Assemblage combustible suivant la revendication 6, caractérisé en ce que le tube (68) central est monte aussi de manière à pouvoir coulisser dans la tubulure supérieure (54).

**Patentansprüche**

1. Brennelement (32) für einen Kernreaktor, der einen auf einer Kerntragplatte (30) gehalterten Reaktorkern (34) aufweist, mit einem oberen Mundstück (54), einem unteren Mundstück (52), einer Anzahl von zwischen dem oberen Mundstück (54) und dem unteren Mundstück (52) ver-laufenden, Kernbrennstoff enthaltenden Brenn-stäben (48), einer Anzahl von Führungsrohren (56), die zwischen dem oberen Mundstück (54) und dem unteren Mundstück (52) verlaufen und daran befestigt sind, und einem ebenfalls zwischen dem oberen und dem unteren Mundstück (54, 52) verlaufenden mittigen Rohr (68), dadurch gekennzeichnet, daß das mittige Rohr (68) drehbar an dem oberen und dem unteren Mundstück (54, 54) gehaltert ist und daß dem mittigen Rohr (68) ein Verriegelungsmechanismus (84) zugeordnet ist, der ein unteres Bauteil (86) enthält, das am unteren Ende des mittigen Rohres (68) befestigt ist und daran angeordnete, mit der Kerntragplatte (30) des Kernreaktors zusammenwirkende Eingriffsmittel (90) aufweist, um das Brennelement (32) an der Kerntragplatte (30) zu befestigen, und daß Verriegelungsmittel (118, 120) am oberen Mundstück (54) efestigt sind, die ein Lösen der Eingriffsmittel (90) verhindern.

2. Brennelement nach Anspruch 1, dadurch gekennzeichnet, daß die Verriegelungsmittel ein Schiebeteil (112), das daran angeordnete erste Zähne (118) hat und verschiebbar auf dem mittigen Rohr (68) sitzt, und ein Haltegehäuse (122) aufweisen, das daran angeordnete zweite Zähne (120) hat an dem oberen Mundstück (54) befestigt ist, wobei die ersten Zähne (118) und die zweiten Zähne (120) so angeordnet sind, daß sie, wenn sie in gegenseitigem Eingriff stehen, eine Drehung des mittigen Rohres (68) verhindern.

3. Brennelement nach Anspruch 2, dadurch gekennzeichnet, daß die Verriegelungsmittel außerdem Vorspannmittel (124) aufweisen, welche die ersten Zähne (118) in Eingriff mit den zweiten Zähnen (120) drängen.

4. Brennelement nach Anspruch 3, dadurch gekennzeichnet, daß die Verriegelungsmittel weiter ein geschlitztes Bauteil (110) aufweisen, das an dem mittigen Rohr (68) befestigt ist und in Eingriff mit dem Schiebeteil (112) steht, um eine Drehung des Schiebeteils (112) mit Bezug auf das mittige Rohr (68) zu verhindern, jedoch eine Verschiebung des Schiebeteils (112) relativ zu dem geschlitzten Bauteil zuzulassen.

5. Brennelement nach Anspruch 4, dadurch gekennzeichnet, daß die zweiten Zähne (120) so angeordnet sind, daß sie, wenn das Brennelement (32) mit der Kerntragplatte (30) verriegelt werden soll, über die ersten Zähne (118) hinwegratschen können.

6. Brennelement nach Anspruch 5, dadurch gekennzeichnet, daß das Brennelement außerdem eine Federscheibe (94) aufweist, die auf dem unteren Mundstück (52) nahe der Kerntragplatte (30) angeordnet ist, um einen Verlust an axialer Vorspannung auf das mittige Rohr (68) zu verhindern, wenn die Federscheibe (94) zusammengedrückt ist.

7. Brennelement nach Anspruch 6, dadurch gekennzeichnet, daß das mittige Rohr (68) außerdem verschiebbar im oberen Mundstück (54) angeordnet ist.

FIG. I

FIG. 2

FIG. 3

FIG. 4

FIG. 5

FIG. 6

FIG. 7

FIG. 8

FIG. 9

8

FIG. 10

FIG. 11

FIG. 12